# DEMANDE DE BREVET EUROPEEN

(11) **EP 0 882 611 A1**
(43) Date de publication de la demande: **09.12.1998**
(21) Numéro de dépôt: 98460020.5
(22) Date de dépôt: 03.06.1998
(51) Int. Cl.: B60J 7/08, B60J 7/20

(54) **Dispositif de transformation d'un cabriolet en configuration "coupé targa" en un cabriolet en configuration "roadster" et inversement**

(30) Priorité: 03.06.1997 FR 9707074
(71) Demandeur: This, Jérôme, 22070 Saint-Brieux Cedex 03 (FR)
(72) Inventeur: This, Jérôme, 22070 Saint-Brieux Cedex 03 (FR)
(74) Mandataire: Vidon, Patrice

(57) **Abrégé**

La présente invention conceme un dispositif de transformation d'un cabriolet de la configuration "coupé targa" en "roadster" et inversement.

Le but de l'invention est de mettre au point un dispositif permettant de métamorphoser rapidement et facilement l'aspect d'un cabriolet.

Ce but est atteint à l'aide d'un dispositif comprenant un ensemble réversible (1) comprenant :
- un premier élément de carrosserie (3) donnant au cabriolet la configuration d'un "coupé targa" et muni d'une lunette arrière (9) et d'un châssis de maintien (17, 19) de ladite lunette arrière,
- un deuxième élément de carrosserie (5) donnant au cabriolet la configuration d'un "roadster", et
- un support (7) , de part et d'autre duquel sont fixés lesdits premier et second éléments de carrosserie,
et un élément porteur (43) disposé entre les ailes arrières du cabriolet, et destiné à recevoir ledit support (7) dudit ensemble réversible, l'élément porteur (43) et l'ensemble réversible (1) étant munis de moyens de maintien (47) aptes à coopérer les uns avec les autres.

## Description

La présente invention concerne un dispositif de transformation d'un cabriolet en configuration "coupé targa" en un cabriolet en configuration "roadster" (terminologie anglaise) et inversement.

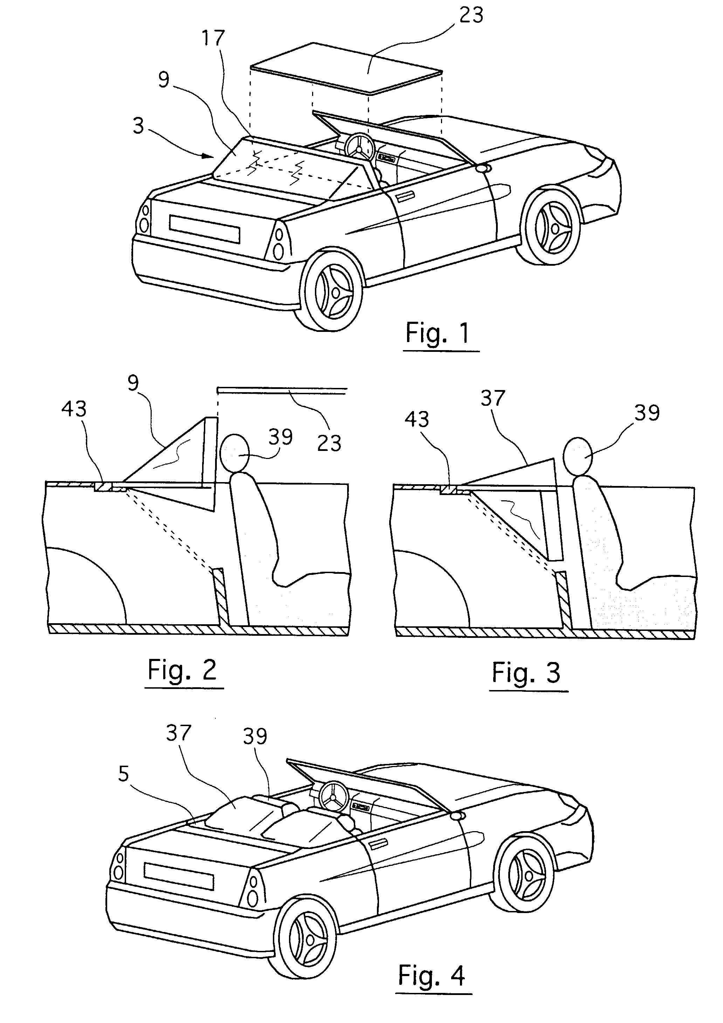

Quelques définitions sont rappelées ci-après. Un cabriolet est un véhicule automobile décapotable. Un véhicule de type "coupé targa" est un véhicule à deux places, décapotable, mais dont la lunette arrière est fixe, (voir figure 1 jointe). Un véhicule de type "roadster", illustré sur la figure 4 jointe est un véhicule également décapotable, comprenant deux places avant et un compartiment arrière aménagé soit pour deux passagers, soit en coffre fermé, mais ne présentant pas de lunette arrière fixe.

Jusqu'à présent les véhicules de type "roadster" ou "spider" possédaient un toit escamotable pliable (ou capote) manuel ou électrique pour fermer l'habitacle en cas de mauvais temps. Toutefois, cette capote est coûteuse et occupe beaucoup de place dans le coffre en position repliée. En outre, elle n'offre pas de réelle protection contre le vol, ni une bonne isolation thermique ou phonique et a parfois été remplacée par un module connu sous la terminologie anglaise de "hard-top" (toit rigide) qui vient se fixer sur le véhicule. Cependant, cette solution est peu pratique car ce toit se révèle très encombrant dès qu'il ne sert plus. Il est également possible d'envisager la solution du "coupé targa" dont seule la partie horizontale, rigide, du toit amovible s'enlève et vient se ranger derrière les sièges ou dans le coffre, (voir la figure 1), mais alors ce véhicule est avant tout un "coupé targa" et non un "roadster" car la partie arrière (montant et lunette arrière) reste fixe.

Pour résoudre ce problème, il a été envisagé de rabattre la lunette arrière dans le véhicule, vers l'avant ou vers l'arrière. Toutefois, cette solution doit respecter des formes très précises et ne peut s'adapter à tous les cabriolets.

L'invention a pour but de résoudre les problèmes précités et d'offrir un dispositif simple à mettre en oeuvre et permettant de métamorphoser très rapidement l'aspect d'un véhicule, de la configuration "coupé targa" en "roadster", sans avoir à transformer toute la carrosserie de celui-ci.

Ce but est atteint à l'aide d'un dispositif de transformation d'un cabriolet en configuration "coupé targa" en un cabriolet en configuration "roadster" et inversement, caractérisé en ce qu'il comprend un ensemble réversible comprenant :
- un premier élément de carrosserie donnant au cabriolet la configuration d'un "coupé targa" et muni d'une lunette arrière et d'un châssis de maintien de ladite lunette arrière,
- un deuxième élément de carrosserie donnant au cabriolet la configuration d'un "roadster", et
- un support, de part et d'autre duquel sont fixés lesdits premier et second éléments de carrosserie,
et un élément porteur disposé entre les ailes arrières du cabriolet et derrière les sièges avant, et destiné à recevoir ledit support dudit ensemble réversible, l'élément porteur et l'ensemble réversible étant munis de moyens de maintien aptes à coopérer les uns avec les autres.

De façon avantageuse, ces moyens de maintien comprennent au moins un doigt prévu sur le support ou l'élément porteur et coopérant avec au moins un perçage prévu inversement respectivement sur l'élément porteur ou sur le support.

Grâce à ces caractéristiques de l'invention, il suffit simplement de sortir l'élément réversible de la voiture et de le retourner de 180° pour passer d'une configuration à une autre. On comprend donc que l'élément réversible est également amovible. Cette transformation peut se faire n'importe où, par le conducteur lui-même, assisté éventuellement d'une deuxième personne, mais ne nécessite pas l'utilisation d'outil, ni de faire appel à une main-d'oeuvre qualifiée. Enfin, les moyens de maintien assurent la fixation et le positionnement correct de l'élément réversible sur l'élément porteur.

De préférence, l'élément porteur et l'ensemble réversible sont munis de moyens de verrouillage de l'élément réversible sur l'élément porteur. Selon un mode de réalisation, les moyens de verrouillage comprennent un mors articulé par rapport à l'élément porteur, mobile entre une position "ouverte" dans laquelle il ne maintient pas le support de l'élément réversible et une position "fermée" dans laquelle il bloque ledit support. De préférence, le mors articulé est déplacé à l'aide d'un moteur, via un système de "roue et vis-sans-fin".

Ce système améliore la fiabilité du dispositif selon l'invention en évitant que l'élément réversible ne soit éventuellement arraché et provoque un accident.

La sécurité est encore améliorée par la présence d'un circuit électronique couplé à la batterie du cabriolet qui empêche le déblocage du moyen de verrouillage si le cabriolet est en mouvement et qui empêche le démarrage du cabriolet si le moyen de verrouillage n'est pas en position "fermée".

Enfin, de façon avantageuse, le dispositif selon l'invention comprend un réceptacle de protection fixé sous l'élément porteur et séparant l'élément réversible du coffre de rangement du cabriolet.

Ce réceptacle a pour fonction de protéger l'ensemble réversible et de l'isoler du reste du coffre du cabriolet. Ceci est nécessaire si le moteur du véhicule se trouve en position centrale et risque de provoquer des nuisances sonores ou odorantes (vapeurs d'essence), ou autres agressions (projection d'huile) sur le dispositif réversible.

L'invention sera mieux comprise à la lecture de la description suivante de plusieurs modes de réalisation de l'invention, donnés à titre d'exemples illustratifs et non limitatifs, cette description étant faite en faisant référence aux dessins joints dans lesquels :
- les figures 1 et 4 sont des vues en perspective, respectivement d'un cabriolet en configuration "coupé targa" et d'un cabriolet en configuration "roadster",
- les figures 2 et 3 sont des vues en coupe de l'élément réversible selon l'invention et d'une partie du cabriolet correspondant aux configurations du cabriolet respectivement des figures 1 et 4,
- la figure 5 est une vue en perspective éclatée d'un mode de réalisation du dispositif de transformation selon l'invention,
- la figure 6 est une vue en coupe d'une partie du dispositif de transformation selon l'invention,
- la figure 7 est une vue de dessus en coupe partielle du dispositif de verrouillage,
- les figures 8, 9, 10, 11 et 16 sont des vues illustrant différentes variantes de réalisation du dispositif de transformation selon l'invention et notamment de l'élément réversible,
- les figures 12 et 13 sont des vues en coupe représentant deux variantes de réalisation dans lesquelles la lunette arrière de l'ensemble réversible est articulée par rapport au châssis de maintien, et
- les figures 14 et 15 sont des vues respectivement identiques aux figures 12 et 13 mais avec l'ensemble réversible retourné de façon que le premier élément de carrosserie soit à l'intérieur du cabriolet.

Selon le principe général de l'invention, le dispositif de transformation d'un cabriolet comprend un ensemble réversible et un élément porteur approprié. Cet ensemble réversible se compose d'un premier et d'un deuxième éléments de carrosserie qui peuvent avoir respectivement des formes très variées, dont plusieurs exemples sont décrits ci-dessous. On notera qu'un mode de réalisation du premier élément de carrosserie peut être combiné avec différents modes de réalisation du deuxième élément de carrosserie.

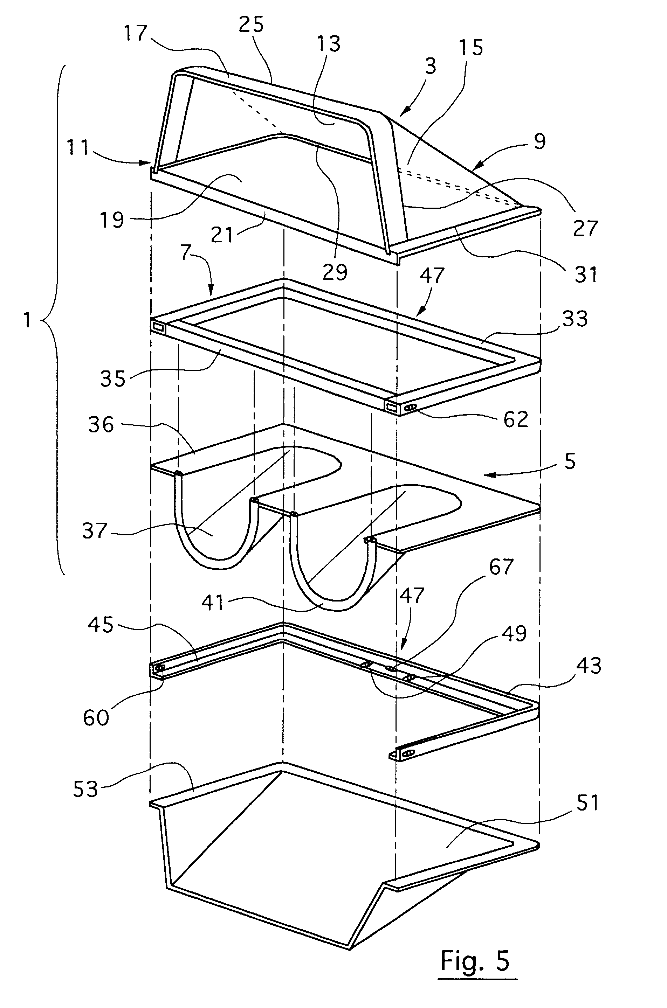

Le dispositif de transformation selon l'invention va maintenant être décrit en faisant référence à la figure 5 qui illustre une première variante de réalisation des premier et deuxième éléments de carrosserie.

Dans la suite de la description, les termes "avant" ou "arrière", sont à considérer par rapport à l'avant ou à l'arrière du véhicule.

Comme illustré en figure 5, l'ensemble réversible 1 se compose d'un premier élément de carrosserie référencé 3, donnant au cabriolet la configuration d'un "coupé targa", d'un deuxième élément de carrosserie référencé 5, donnant au cabriolet la configuration d'un "roadster" et d'un support 7.

Le premier élément de carrosserie 3 comprend une lunette arrière 9 et un châssis de maintien 11 de cette lunette. La lunette arrière 9 est une sorte de coque comprenant une surface centrale 13 inclinée vers l'arrière, sensiblement rectangulaire et deux pans latéraux triangulaires 15. Le châssis de maintien 11 comprend un arceau transversal 17, de forme trapézoïdale, perpendiculaire à l'axe longitudinal du cabriolet et une plaque 19 de forme rectangulaire. Cette plaque 19 a une forme en L, c'est à dire que son côté avant est replié vers le bas pour former un rebord 21. Les deux extrémités libres de l'arceau 17 sont par ailleurs soudées sur la plaque 19. Par ailleurs, comme illustré en figure 1, l'arceau 17 est conçu pour recevoir le bord arrière d'un toit amovible 23. L'ensemble élément réversible 1 et toit amovible 23 ressemble alors à un module de "hard-top".

Le bord central avant 25 et les bords latéraux sensiblement verticaux 27 de la lunette arrière 9 sont maintenus et fixés par l'arceau 17 et le bord central arrière 29 et les bords latéraux horizontaux 31 de la lunette arrière sont maintenus et fixés par ladite plaque 19.

Le support 7 est constitué d'un profilé 33 de section rectangulaire, cintré en U et éventuellement d'une barre transversale 35, soudés ensemble de façon à former un cadre de forme rectangulaire dont les dimensions correspondent à celles de la plaque 19. Cette dernière est collée ou soudée sur le support 7.

Le deuxième élément de carrosserie 5 est une plaque plane 36 dont la forme et les dimensions de la périphérie correspondent à celle du support 7. Elle est munie d'au moins un bossage 37, de préférence de deux, par exemple en forme de demi tronc de cône, prévu sur ladite plaque plane de façon à être dans l'alignement de l'appui-tête 39 de l'un des sièges avant du cabriolet lorsque l'ensemble réversible 1 est en configuration "roadster", (voir figure 4). De façon facultative, le bord avant semi-circulaire de chaque bossage 37 peut être muni d'un arceau 41 qui est alors soudé à la barre transversale 35 du support 7. En outre, le bord de la plaque 5 est soudé ou collé sur le support 7.

L'élément porteur 43 est disposé et soudé entre les ailes arrières du cabriolet, derrière les sièges avant et de façon à affleurer au niveau de la partie supérieure de la carrosserie du cabriolet, comme cela apparaît mieux sur les figures 2, 3 et 10. Cet élément porteur 43 est un profilé en L définissant un épaulement 45 conçu pour recevoir le support 7. Selon une variante, l'élément porteur 43, sur lequel repose le dispositif, peut matérialiser les ailes arrières du véhicule, ou encore faire partie intégrante du réceptacle, ce dernier devenant un élément du châssis soutenant le dispositif. D'une manière générale, ce profilé présente une forme correspondant à celle du support 7 qu'il reçoit, si ce n'est qu'il est généralement ouvert vers l'avant pour faciliter la mise en place de l'élément réversible. Ici, ce profilé est cintré en U et ses dimensions intérieures correspondent aux dimensions extérieures du support 7 en forme de cadre rectangulaire.

Cet élément porteur 43 et l'ensemble réversible 1 (notamment le support 7) sont munis de moyens de maintien 47 aptes à coopérer les uns avec les autres. Les moyens de maintien 47 sont constitués par au moins un doigt 49 (ici deux) prévu sensiblement au milieu de la face interne, verticale, de l'élément porteur 43, et par au moins un perçage (ici deux, non visibles sur la figure 5), prévu dans le support 7 et destiné au passage dudit doigt 49. Inversement, le doigt 49 et le perçage pourraient bien sûr être prévus respectivement dans le support 7 et dans l'élément porteur 43.

Enfin, il est possible d'ajouter un réceptacle de protection 51 à l'élément réversible 1 et à l'élément porteur 7 précités. Ce réceptacle 51 présente une forme qui n'est pas une caractéristique limitative de l'invention mais qui est telle qu'elle permet de recevoir l'élément de carrosserie 3 ou 5 le plus encombrant, généralement le premier élément de carrosserie donnant la configuration "coupé targa" et qui présente une lunette arrière et/ou un arceau fixe. Ici, le réceptacle de protection 51 a une forme correspondant à celle de la lunette arrière 9. En outre, ce réceptacle 51 présente un rebord 53 destiné à être fixé (par exemple par soudage) sur la surface de l'épaulement 45 de l'élément porteur 43.

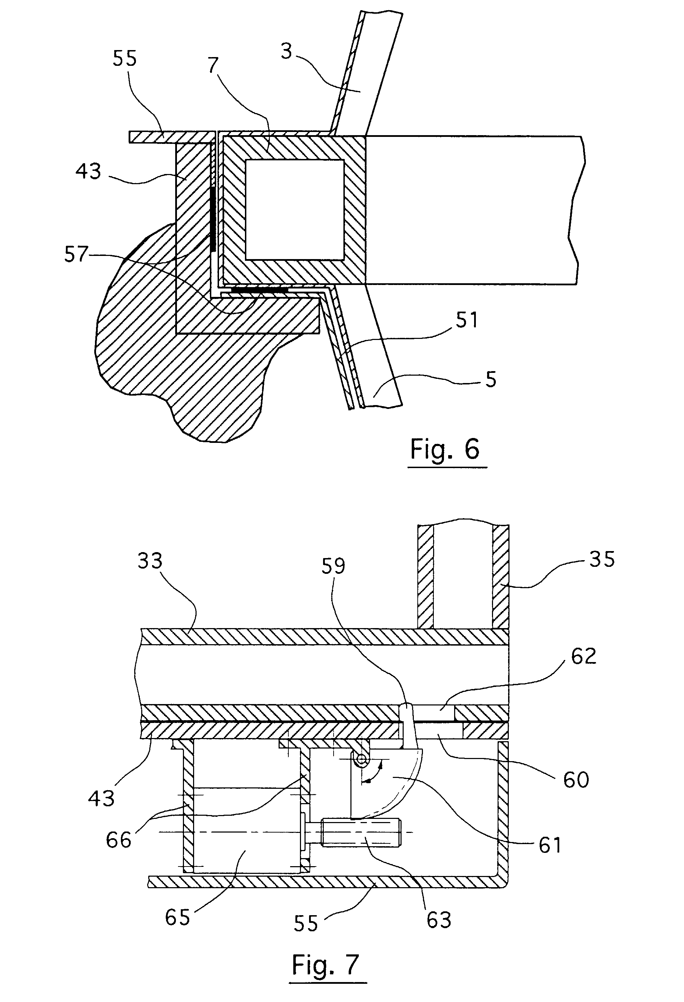

La figure 6 illustre plus précisément l'installation des différentes pièces du dispositif précité. L'élément porteur 43 est soudé à la carrosserie 55 du véhicule de même que le réceptacle de protection 51 est soudé sur l'élément porteur 43. Si le matériau employé le permet, les ailes 55, l'élément porteur 43 et le réceptacle 51 peuvent être fabriqués (ou moulés) en une seule pièce. Deux joints plats 57 sont collés sur au moins une partie et de préférence toute la longueur des deux faces internes du profilé en L constituant l'élément porteur 43. Il assurent l'étanchéité du dispositif et permettent de supprimer le jeu existant entre l'élément réversible 1 (3 + 5 + 7) et l'élément porteur 43 et donc toutes les vibrations désagréables.

La figure 7 est une vue de dessus représentant un mode de réalisation des moyens de verrouillage de l'élément réversible sur l'élément porteur. Ces moyens de verrouillage comprennent un mors 59, articulé par rapport à l'élément porteur 43. Ce mors 59 est mobile entre une position "ouverte" et une position "fermée" (représentée en figure 7), dans laquelle il bloque ledit support 7 (33 + 35). Le blocage s'effectue lorsque l'extrémité du mors pénètre dans des trous oblongs 60 et 62 prévus respectivement sur les côtés de l'élément porteur 43 et du profilé 33 du support 7. Plus précisément, ce mors 59 est fixé sur un secteur denté 61 qui par rotation de 90° fait pivoter le mors 59. Le secteur de 61 est lui-même actionné par une vis sans fin 63 commandée par un moteur 65. Le secteur denté 61 et le moteur 65 sont tous deux fixés sur l'élément porteur 43 par un support référencé 66. De chaque côté, les deux systèmes de verrouillage sont situés à l'intérieur des ailes de la carrosserie 55, mais légèrement en retrait par rapport aux deux extrémités de l'élément porteur 43, pour ne pas être visibles de l'extérieur.

Afin de stopper le mouvement du mors 59 dans ses deux positions extrêmes, un circuit électronique limiteur de couple (non représenté sur la figure 7) permet de stopper le moteur 65.

Ces moyens de verrouillage sont complétés par un dispositif complémentaire de sécurité. Ainsi, un capteur électromagnétique 67 (voir également la figure 5), disposé sur la face interne de l'élément porteur 43 permet de vérifier que le support 7 est correctement positionné. Par ailleurs, un circuit électronique (non représenté en figure 7), couplé à la batterie du cabriolet empêche le déblocage du moyen de verrouillage si le cabriolet est en mouvement et empêche le démarrage du cabriolet si le moyen de verrouillage n'est pas en position "fermée" ou si le capteur électromagnétique 67 détecte que le support 7 n'est pas correctement positionné.

Il faut noter qu'une solution entièrement mécanique, non représentée ici, consisterait à remplacer les moyens de verrouillage (mors et moteur) par une serrure située sur la barre transversale 35 du support 7 coopérant avec l'élément support 43.

Lors de l'utilisation, si le cabriolet est en configuration "coupé targa" (figure 2), il suffit de débloquer le moyen de verrouillage, d'enlever le toit amovible 23, s'il est présent, et de retourner manuellement l'élément réversible 1 de 180°, pour l'amener en configuration "roadster", (figure 3).

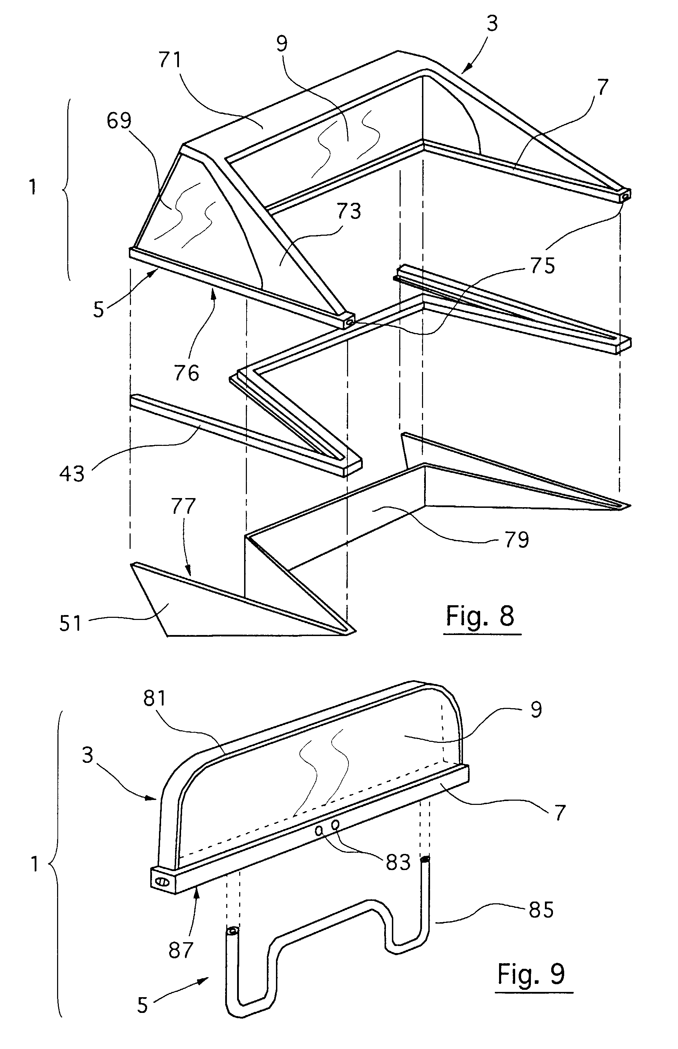

La figure 8 illustre une variante de réalisation de l'ensemble réversible 1. Dans ce cas, le premier élément de carrosserie 3 comprend outre la lunette arrière 9, deux vitres latérales 69. En outre, le châssis de maintien du premier élément de carrosserie 3 est un module de carrosserie constitué d'un montant transversal 71 maintenant le bord supérieur de la lunette arrière 9, et prolongé vers l'arrière du cabriolet par deux montants de carrosserie latéraux 73, inclinés vers l'arrière et vers le bas du cabriolet et maintenant les vitres latérales 69.

Le support 7 est un profilé en L, cintré de façon à définir à ses deux extrémités, deux zones latérales triangulaires reliées par une partie rectiligne.

L'élément porteur 43 est un profilé en L dont la forme correspond à celle du support 7. Un doigt de maintien est prévu au fond de l'extrémité pointue de chaque partie triangulaire de l'élément porteur 43 et réciproquement un perçage 75 est prévu sur la pointe de chaque partie triangulaire du support 7.

Le deuxième élément de carrosserie 5 est constitué par une plaque dont la forme correspond à la surface délimitée par le support 7.

Un réceptacle 51 constitué par deux logements 77 de forme pyramidale reliés entre eux par une plaque verticale 79 est également prévu.

Cette version de l'ensemble réversible est particulièrement destinée à transformer les véhicules du type berlinette en "spider". Il est également possible que seuls la lunette arrière 9 et le montant 71 fassent partie de l'élément réversible 1 et que les vitres latérales 69 fassent partie de la carrosserie fixe du cabriolet.

La figure 9 illustre encore un autre mode de réalisation de l'ensemble réversible 1, destiné aux véhicules dont les dimensions sont très restreintes. Dans ce cas, le châssis de maintien du premier élément de carrosserie 3 est réduit à un simple arceau transversal 81, perpendiculaire à l'axe longitudinal du cabriolet et la lunette arrière 9 est verticale et enchâssée dans cet arceau. Le support 7 se compose d'une barre transversale rectangulaire munie de deux perçages 83. Enfin, le deuxième élément de carrosserie 5 est constitué par un double arceau 85, monté sur une plaque plane 87 rectangulaire, allongée dont la forme et les dimensions de la périphérie correspondent à celle du support 7. Cette version de l'élément réversible 7 peut même, au lieu d'être amovible pour pouvoir être retournée, être directement montée sur un axe prévu sur l'élément porteur 43 correspondant et pivoter autour de celui-ci. Dans ce cas toutefois, il est nécessaire de supprimer le double arceau 85 pour éviter qu'il ne gène le mouvement de rotation.

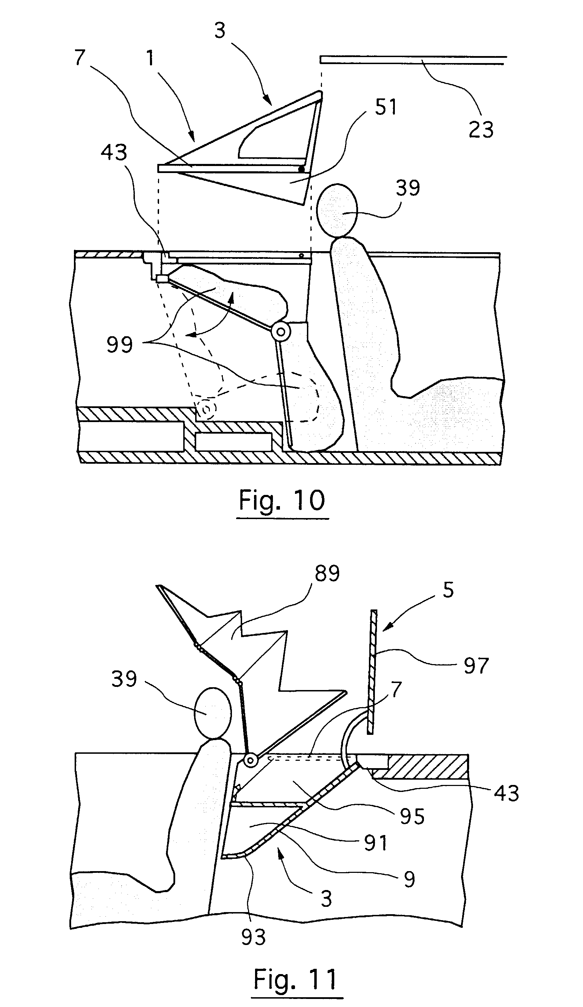

La figure 11 représente encore une autre variante de réalisation de l'invention, dans laquelle le premier élément de carrosserie 3 contient un toit escamotable et pliable ou "capote dépliable" 89. Dans ce cas, le châssis de maintien de la lunette arrière 9 du premier élément de carrosserie 3 est un module de carrosserie présentant dans sa partie supérieure 91, une fenêtre 93 destinée à recevoir ladite lunette arrière 9 et dans sa partie inférieure, un coffre 95 renfermant le toit escamotable et pliable 89. Le support 7 est un profilé cintré en U constituant la base du coffre 95 et de forme similaire à celui illustré en figure 5. Enfin, le deuxième élément de carrosserie 5 est une plaque articulée par rapport audit support et formant un couvercle de fermeture 97 dudit coffre.

En configuration "roadster" (illustrée sur la figure 11), le couvercle 97 obture l'espace derrière les appui-têtes 39 mais peut être ouvert pour déplier le toit escamotable 89 en cas de pluie.

La figure 10 illustre un cas particulier où le réceptacle est constitué par une banquette arrière pliante 99, articulée au sommet du dossier et entre le siège et le dossier. Dans la configuration "coupé 2+2" (deux places avant et une banquette arrière pour deux personnes), la banquette 99 est en position normale (illustrée en pointillé) et l'élément réversible 1 (par exemple semblable à celui de la figure 8), ainsi que le toit rigide amovible 23 sont complètement retirés. Au contraire, dans la configuration "roadster", la banquette arrière 99 est soulevée de façon que le siège soit sensiblement vertical et que le dossier soit incliné d'environ 45° par rapport à l'horizontale, (situation de la banquette représentée en traits pleins). Cette banquette 99 sert alors de réceptacle pour l'élément réversible 1 qui est alors retourné dans la position inverse à celle illustrée en figure 10, (c'est à dire le premier élément de carrosserie 3 à l'intérieur du cabriolet).

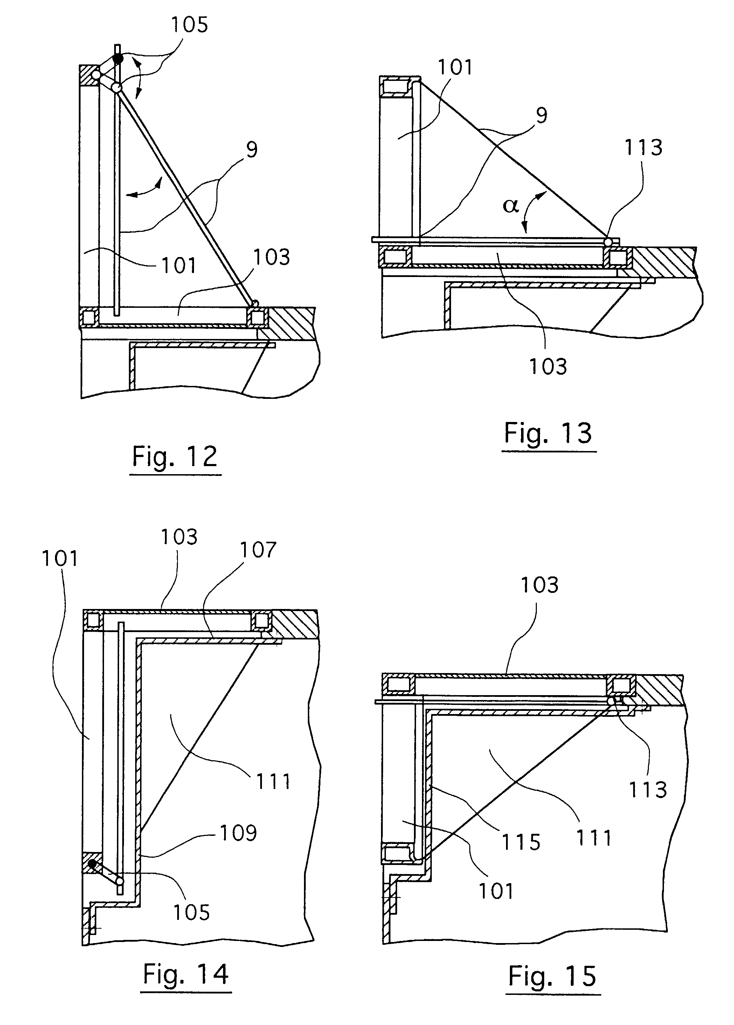

Les figures 12 à 15 illustrent une variante de réalisation selon laquelle la lunette arrière 9 est articulée de façon à pouvoir être déplacée et rabattue et à tenir moins de place lorsque l'élément réversible 1 est en position "roadster".

Plus précisément comme illustré en figure 12, le châssis de maintien se compose d'un arceau transversal 101 sensiblement vertical, semblable à celui de la figure 5 et d'un arceau transversal 103 sensiblement horizontal. Ces deux arceaux sont perpendiculaires à l'axe longitudinal du cabriolet et sont reliés entre eux par leurs extrémités libres.

La lunette arrière 9 est plane et rectangulaire, elle est inclinée et articulée autour d'un élément d'articulation 105 prévu dans la partie médiane horizontale de l'arceau transversal vertical 101, de façon à pourvoir être repliée dans le plan de cet arceau 101, comme illustré en figures 12 et 14. L'élément d'articulation 105 peut être constitué par un système de biellettes permettant à la lunette arrière 9 de passer de la position inclinée à la position verticale. Selon une variante (non représentée), l'élément d'articulation est une simple charnière, servant à rabattre la lunette arrière.

Seule la partie plane centrale de la lunette arrière bascule, les parties latérales du châssis entourant cette lunette ou les côtés de la lunette arrière s'ils existent, restent par contre fixes. Une fois la lunette arrière 9 repliée, l'ensemble réversible peut tenir dans un réceptacle 107 de volume réduit, illustré en figure 14 et comprenant une partie centrale rectangulaire 109 de faible épaisseur et deux parties latérales triangulaires 111, destinées à recevoir les parties latérales précitées du châssis.

Lorsque l'inclinaison de la lunette arrière 9 par rapport à l'horizontale est plus importante, c'est à dire que l'angle α entre la lunette arrière et l'horizontale est inférieur à 45°, la lunette arrière 9 est alors articulée autour d'un élément d'articulation 113, par exemple une charnière, prévue sur la partie médiane de l'arceau horizontal 103. Le reste est identique à ce qui vient d'être décrit pour la figure 12. La figure 15 illustre ce même élément réversible 1 en position inversée et rangé dans un réceptacle 115, semblable au réceptacle 107, si ce n'est que sa hauteur est encore moindre.

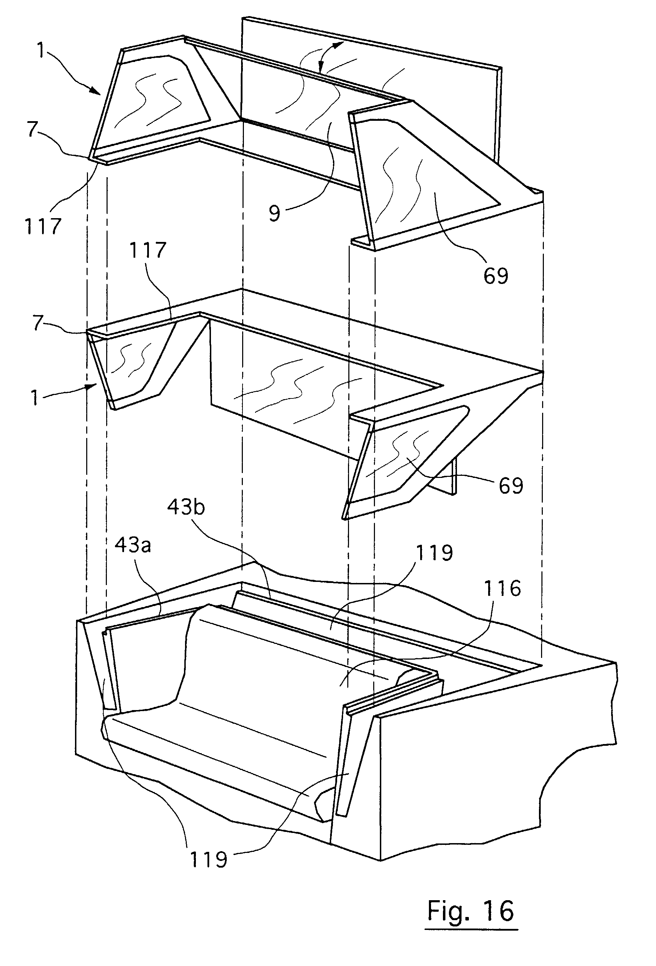

Enfin, la figure 16 représente une variante possible particulièrement adaptée à un coupé 2 + 2. Dans sa partie supérieure, cette figure représente l'élément réversible 1 en position "coupé targa", dans sa partie centrale, la figure représente l'élément réversible 1 en position "roadster" et dans sa partie inférieure, cette figure représente une partie de la carrosserie du cabriolet prise au niveau de la banquette arrière 116 de celui-ci.

Le premier élément de carrosserie 3 se compose d'une lunette arrière 9, de deux vitres latérales 69 et d'un châssis entourant lesdites vitres latérales 69. La lunette arrière 9 est articulée dans sa partie basse sur le châssis, de façon à pouvoir s'écarter vers l'arrière du cabriolet et à passer de la position inclinée à la position verticale, (voir flèche). Le support 7 est semblable à celui de la figure 5, si ce n'est que la barre transversale 35 a été supprimée. Enfin, le deuxième élément de carrosserie 5 est une plaque plane 117 dont la forme reprend celle du réceptacle 119 située dans les ailes du cabriolet et derrière la banquette passager. Enfin, l'élément porteur 43 est en trois parties, deux profilés latéraux 43a de cet élément sont prévus sur les côtés de la banquette 116 et un profilé arrière 43b de cet élément, prévu à une certaine distance de la banquette arrière 116, de façon à ménager un espace apte à recevoir la lunette arrière lorsqu'elle est en position verticale.

De préférence, dans les divers modes de réalisation qui précèdent, le réceptacle protecteur, l'élément porteur, le deuxième élément de carrosserie, le support et les parties du premier élément de carrosserie autre que la lunette arrière sont réalisés dans un matériau léger, par exemple en aluminium.

## Revendications

1. Dispositif de transformation d'un cabriolet en configuration "coupé targa" en un cabriolet en configuration "roadster" et inversement, caractérisé en ce qu'il comprend un ensemble réversible (1) comprenant :
- un premier élément de carrosserie (3) donnant au cabriolet la configuration d'un "coupé targa" et muni d'une lunette arrière (9) et d'un châssis de maintien (17, 19, 71, 73, 101, 103) de ladite lunette arrière,
- un deuxième élément de carrosserie (5) donnant au cabriolet la configuration d'un "roadster", et
- un support (7) , de part et d'autre duquel sont fixés lesdits premier et second éléments de carrosserie,
et un élément porteur (43) disposé entre les ailes arrières du cabriolet et derrière les sièges avant, et destiné à recevoir ledit support (7) dudit ensemble réversible (1), l'élément porteur (43) et l'ensemble réversible (1) étant munis de moyens de maintien (47) aptes à coopérer les uns avec les autres.

2. Dispositif de transformation selon la revendication 1, caractérisé en ce que l'élément porteur (43) et l'ensemble réversible (1) sont munis de moyens de verrouillage (59) de l'élément réversible sur l'élément porteur.

3. Dispositif de transformation selon la revendication 1, caractérisé en ce que les moyens de maintien (47) comprennent au moins un doigt (49) prévu sur le support (7) ou l'élément porteur (43) et coopérant avec au moins un perçage (75, 83) prévu inversement respectivement sur l'élément porteur ou sur le support.

4. Dispositif de transformation selon la revendication 2, caractérisé en ce que les moyens de verrouillage comprennent un mors (59) articulé par rapport à l'élément porteur (43), mobile entre une position "ouverte" dans laquelle il ne maintient pas le support (7) de l'élément réversible (1) et une position "fermée" dans laquelle il bloque ledit support.

5. Dispositif de transformation selon la revendication 1 ou 4, caractérisé en ce qu'un circuit électronique couplé à la batterie du cabriolet empêche le déblocage du moyen de verrouillage (59) si le cabriolet est en mouvement et empêche le démarrage du cabriolet si le moyen de verrouillage (59) n'est pas en position "fermée".

6. Dispositif de transformation selon la revendication 1, caractérisé en ce qu'il comprend un réceptacle de protection (51, 111) fixé sous l'élément porteur (43) et séparant l'élément réversible (1) du coffre de rangement du cabriolet.

7. Dispositif de transformation selon la revendication 1, caractérisé en ce que le châssis de maintien de la lunette arrière (9) du premier élément de carrosserie (3) comprend un arceau transversal (17), perpendiculaire à l'axe longitudinal du cabriolet, et une plaque (19) dont la forme rectangulaire et les dimensions correspondent à celle du support (7) et en ce que la lunette arrière (9) comprend une surface centrale (13) inclinée vers l'arrière et deux pans latéraux triangulaires (15), le bord central avant (25) et les bords latéraux sensiblement verticaux (27) de la lunette arrière étant maintenus par l'arceau (17) et le bord central arrière (29) et les bords latéraux horizontaux (31) de la lunette arrière étant maintenus par ladite plaque (19).

8. Dispositif de transformation selon la revendication 1, caractérisé en ce que le premier élément de carrosserie (3) comprend en outre deux vitres latérales (69) et en ce que le châssis de maintien est un module de carrosserie constitué par un montant transversal (71) maintenant le bord supérieur de la lunette arrière (9) et prolongé vers l'arrière du cabriolet par deux montants latéraux (73) inclinés, maintenant les deux vitres latérales (69) et en ce que le support (7) est un profilé en L, cintré de façon à définir deux zones latérales triangulaires situées sous lesdites vitres latérales (69).

9. Dispositif de transformation selon la revendication 1, caractérisé en ce que le deuxième élément de carrosserie (5) est une plaque plane (76, 87) dont la forme et les dimensions de la périphérie correspondent à celles du support (7).

10. Dispositif de transformation selon la revendication 1, caractérisé en ce que le châssis de maintien de la lunette arrière (9) du premier élément de carrosserie (3) comprend un arceau transversal (101) sensiblement vertical et un arceau transversal sensiblement horizontal (103), perpendiculaires à l'axe longitudinal du cabriolet et reliés entre eux par leurs extrémités libres, et en ce que la lunette arrière (9) est inclinée et montée de façon pivotante autour d'un élément d'articulation (105, 113) prévu dans la partie centrale de l'arceau transversal sensiblement vertical (101) ou de l'arceau transversal sensiblement horizontal (103), de façon à pouvoir être repliée respectivement dans le plan de l'arceau sensiblement vertical (101) ou dans le plan de l'arceau sensiblement horizontal (103).
